# EUROPEAN PATENT SPECIFICATION

(11) **EP 2 374 703 B1**
(45) Date of publication and mention of the grant of the patent: **05.03.2014**
(21) Application number: 10192180.7
(22) Date of filing: 23.11.2010
(51) Int. Cl.: B62M 3/08

(54) **Bicycle pedal assembly with integral axle**
Fahrradpedalanordnung mit integrierter Achse
Ensemble de pédalier d'une bicyclette doté d'un axe intégré

(30) Priority: 12.04.2010 US 323023 P; 23.07.2010 US 842422
(43) Date of publication of application: 12.10.2011
(73) Proprietor: Kawai, Shuji, Karumi-ku, Kobe Hyogo (JP)
(72) Inventor: Kawai, Shuji, Karumi-ku, Kobe Hyogo (JP)
(74) Representative: Kensett, John Hinton

(56) References cited:
- DE-A1-102007 034 882
- FR-A1- 2 440 865
- US-A- 4 335 628
- US-A1- 2005 204 860

## Description

### Background of the invention

### Field of the invention

The present invention relates generally to bicycles, and more specifically to bicycle pedals.

### Description of Prior Art and Related Information

Prior art bicycle pedals usually include a spindle that is rotationally fixed to a crank arm. The conventional pedal body which includes bearings within the body itself to facilitate rotation between the pedal body and the spindle which is fixed to the crank arm. As a result, the conventional pedal body has a greater thickness or height to accommodate the bearings disposed therein.

The undesirable thickness of conventional body pedals heightens the center of a gravity for a rider, leading to greater instability. Also, a tall or thick body pedal provides for low pedal to ground clearance, thereby restricting the length of a crank arm. Shorter crank arms provide less leverage on the down stroke for a rider.

A bicycle pedal assembly corresponding to the preamble of claim 1 is disclosed in FR2440865. However, this prior art solution does not seem to be completely satisfying.

### Summary of the invention

The present invention provides structures and methods which overcome the deficiencies in the prior art.

In one aspect, a bicycle pedal assembly as in claim 1 is provided. The pedal assembly comprises a bearing-less pedal body including a medial side and a lateral side. The pedal body defines a length, a width and a maximum thickness. An axle is connected with the pedal body and configured to be coupled to a crank arm. One or more bearings are located outside the pedal body and configured to facilitate rotation of the pedal body with respect to a crank arm. A hollow bolt is configured to receive the axle and couple the axle to a crank arm.

In one embodiment, the axle does not extend entirely across the width of the pedal body. The pedal body comprises a cage. One or more bridged may be disposed within the cage and coupled to inner portions of the cage. The pedal body may also define an axle-free space within the cage. The axle may also be tapered.

In another aspect, a bicycle pedal assembly comprises a bearing-less pedal body including a medial side and a lateral side. The pedal body defines a length and a width. An axle is integral with the pedal body. The pedal assembly also comprises a crank arm defining a bore. A hollow bolt is coupled to the crank arm and configured to receive the axle. The axle need not extend entirely across the width of the pedal body. Instead, the axle may extend only partially across the width of the pedal body and join with bridges which are coupled to inner portions of the cage of the pedal body. In another embodiment, the pedal body defines a complete axle-free void within the cage.

In a further aspect, a bicycle pedal assembly comprises a bearing-less pedal body including a medial side and a lateral side. The pedal body defines a length and a width. An axle is integral with the pedal body. The assembly further comprises a crank arm defining a bore and an axle connector coupling the axle to the crank arm.

The axle connector may house at least one bearing located outside the pedal body and configured to facilitate rotation of the axle with respect to the crank arm. The axle connector preferably comprises a hollow bolt screwed into the bore of the crank arm.

### Brief description of the drawings

Figure 1 is an exploded, perspective view of a preferred embodiment of a bicycle pedal assembly;
Figure 2 is a perspective view of the preferred pedal assembly showing X, Y and Z axes in phantom lines;
Figure 3 is a close-up exploded, perspective view of the preferred embodiment of the pedal assembly;
Figure 4 is an axial cross-sectional view of the preferred embodiment of the pedal assembly;
Figure 5 is an operative view of the preferred embodiment of the pedal assembly;
Figure 6 is a diagram of a preferred method of manufacturing a bicycle pedal assembly;
Figure 7 is a diagram of a preferred method of retrofitting an existing bicycle with a preferred pedal assembly;
Figure 8 is a top plan view of a second preferred embodiment of a bicycle pedal body;
Figure 9 is an exploded view of a second preferred embodiment of a bicycle pedal assembly;
Figure 10 is a top plan view of a third preferred embodiment of a bicycle pedal body;
Figure 11 is a top plan view of a fourth preferred embodiment of a bicycle pedal body;
   and
Figure 12 is a top plan view of a fifth preferred embodiment of a bicycle pedal body.

### Detailed description of the preferred embodiments

The invention and its various embodiments can now be better understood by turning to the following detailed description wherein illustrated embodiments are described. It is to be expressly understood that the illustrated embodiments are set forth as examples and not by way of limitations on the invention as ultimately defined in the claims.

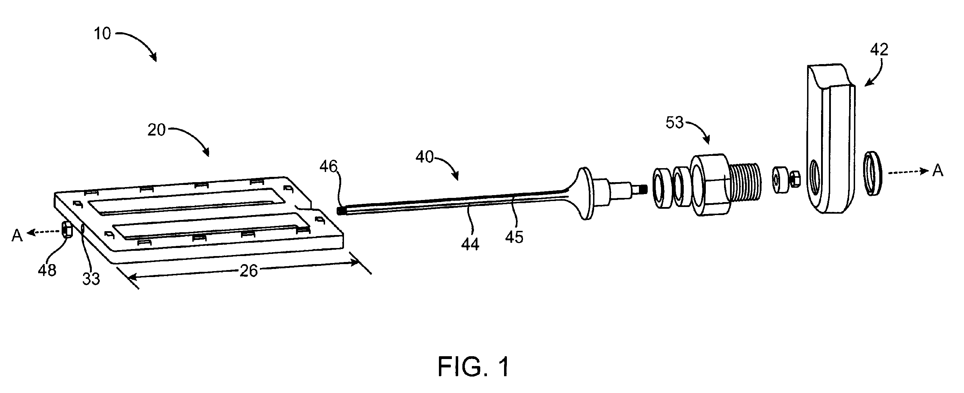

Figure 1 illustrates a first preferred embodiment of a bicycle pedal assembly 10. In Figure 1, the assembly includes a bearing-less or bearing-free pedal body 20. It is to be understood that "bearing-less" or "bearing-free" used throughout this specification mean that the pedal body 20 does not house any bearings or other annular rotators, i.e., annular mechanisms which facilitate rotation. Accordingly, any bearings or annular rotators included in the pedal assembly 10 are disposed outside the pedal body 20. The pedal assembly 10 defines an axis "A" as shown in Figure 1.

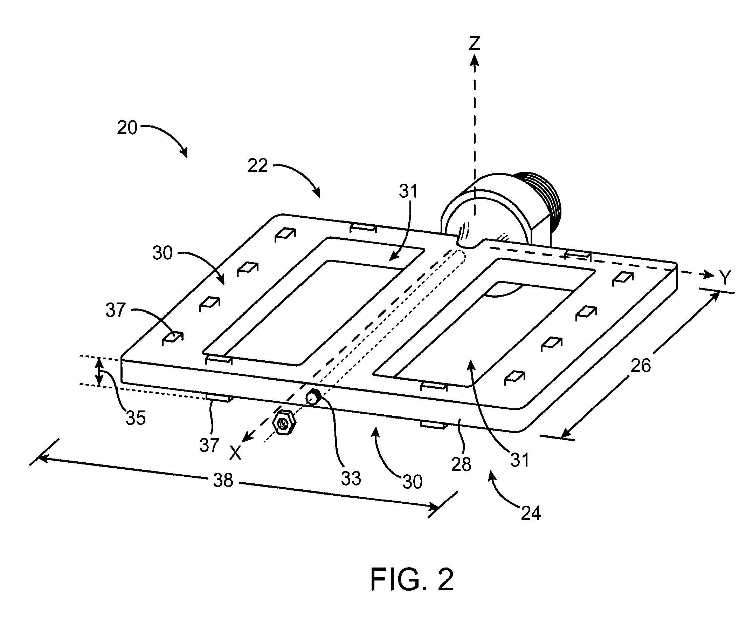

In Figure 2, the pedal body 20 includes a cage with a medial side 22 and a lateral side 24, and defines a width 26 between the sides 22, 24. The pedal body 20 comprises a plate, or platform, 28 having a pair of oppositely facing receiving surfaces 30 which are configured to be engaged by the user. One or more slots 31 are defined through the receiving surfaces 30 and configured to receive shoe clips, or cleats, such as those commonly used by mountain or road bikers.

X, Y and Z axes are drawn in Figure 2 with respect to the pedal body 20 as shown in this particular stationary position for purposes of illustration, although it is to be expressly understood that the pedal body 20 is rotatable with respect to the X-axis. The pedal body 20 includes a centrally located channel 33 that extends along the width 26 of the body, namely, between the medial side 22 and lateral side 24, and along the axis A of the assembly 10.

The pedal body 20 defines a maximum thickness 35 between the two receiving surfaces 30, which maximum thickness 35 accounts for the protrusions 37 that facilitate traction. In the preferred embodiment, the maximum thickness 35 of the pedal body 20 is preferably less than 15 millimeters (mm), and even more preferably less than 10mm. In the first preferred embodiment, the pedal body 20 defines a maximum thickness 35 in the range of 4mm to 9mm. Without the protrusions 37, the maximum thickness of the plate 28 between the two receiving surfaces 30 is preferably in the range of 2 mm to 8 mm. It will be appreciated that omitting any bearings within the preferred pedal body 20 enables the unique thinness of the pedal body 20. The pedal body 20 also comprises a length 38 along the Y-axis as defined by the receiving surface 30.

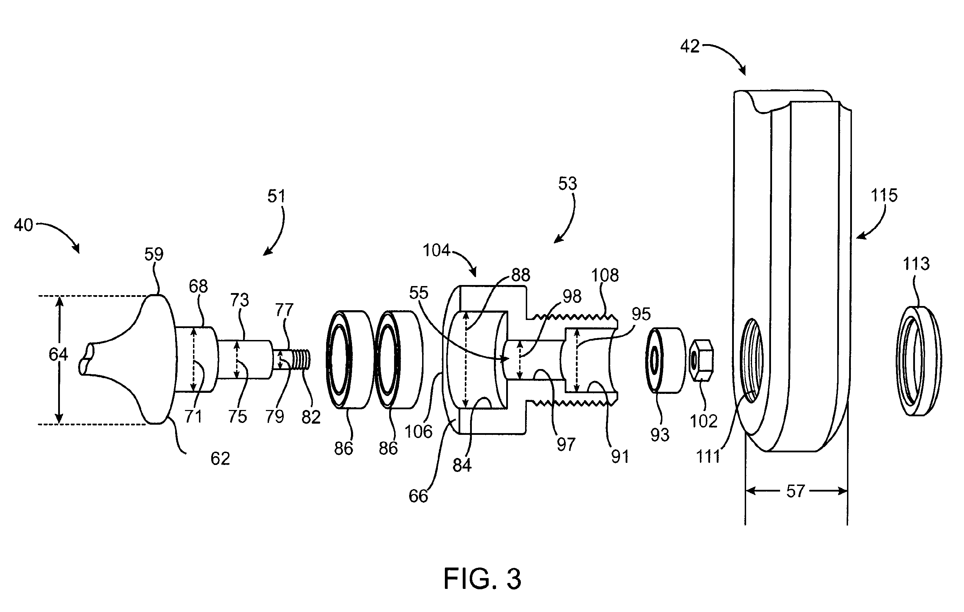

Referring to Figures 1 and 3, the pedal assembly 10 includes a spindle, or axle, 40 coupled to, or supporting, the pedal body 20. In the preferred embodiment, the spindle 40 is rotatable with respect to the crank arm 42 which is unlike conventional spindles which are rotationally fixed to crank arms. This is accomplished in one preferred embodiment by making the spindle 40 rotatable with respect to a hollow bolt 53 which is coupled to the crank arm 42.

The spindle 40 comprises a lateral rod portion, or simply rod, 44 which is configured to extend substantially through the width 26 the of the pedal body 20. In the preferred embodiment, the rod portion 44 is inserted into a centrally located axial channel 33 of the pedal body 20 and thus extends through the entire width 26 of the pedal body 20 from the medial 20 to the lateral side 24. In the preferred embodiment, the rod portion 44 is preferably in the range of 85mm to 110mm long and may be formed with a splined external surface 45. In the preferred embodiment, the rod 44 may have a uniquely small diameter in the range of 1 mm to 6 mm, with a preferred range of 2 mm to 4 mm. The distal portion 46 of the spindle 40 may be externally threaded and configured to mate with a spindle nut 48.

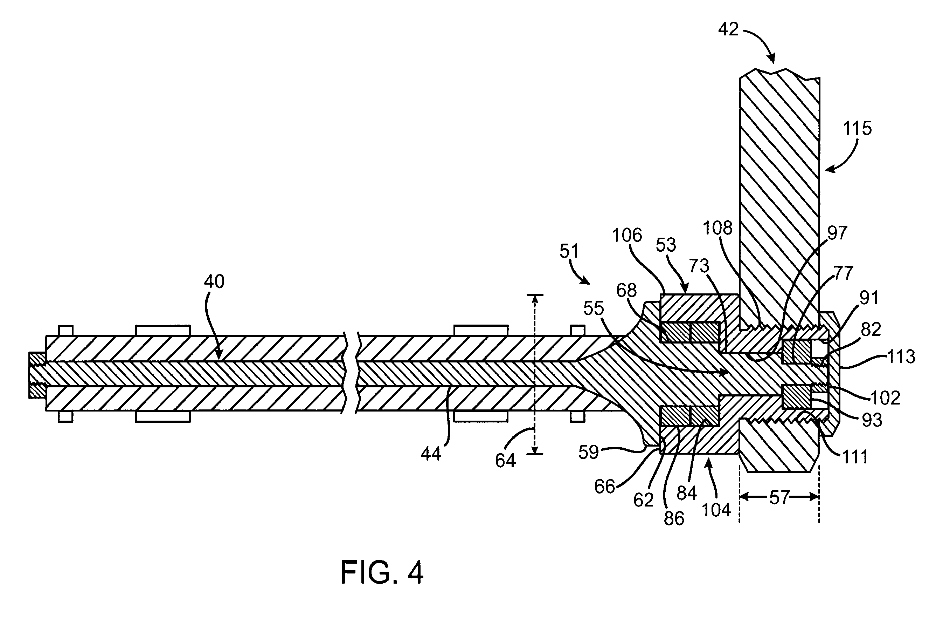

In Figures 3 and 4, a medial portion 51 of the spindle 40 is configured to extend through a preferred hollow bolt 53 according to the invention. Thus, the preferred hollow bolt 53 comprises a passageway, or through-hole, 55, that axially extends through the entire bolt 53, namely, along the assembly axis A. As discussed more fully below, the passageway 55 may comprise one or more chambers and bores of differing sizes, but nonetheless provides an opening extending through the axis of the bolt 53 so as to enable a portion of the spindle 40 to extend all the way through, if desired. In the preferred embodiment as shown more explicitly in Figure 4, the spindle 40 extends transversely through at least a portion of the crank arm 42 as the spindle 40 is received by the bolt 53. In particular, the medial spindle portion 51 may extend at least partially into the crank arm 42, but preferably through the majority of the width 57 of the crank arm 42.

The spindle medial portion 51 includes a stop 59 which in the preferred embodiment comprises a flared out conical portion 59 extending from the rod 44 and leading to an annular surface 62 with a diameter 64 sufficiently large so as to abut the bolt 53 , more specifically, a lateral annular surface 66 of the preferred bolt 53.

In Figure 3, the medial spindle portion 51 also comprises a first cylindrical portion 68 disposed proximally to the stop 59 and configured with a first cylindrical diameter 71. A second cylindrical portion 73 is disposed proximally to the first cylindrical portion 68 and configured with a second cylindrical diameter 75 that is preferably smaller than the first cylindrical diameter 71. A third cylindrical portion 77 is disposed proximally to the second cylindrical portion 73 and configured with a third cylindrical diameter 79 that is preferably smaller than the second cylindrical diameter 75. The third cylindrical portion 77 comprises an externally threaded proximal portion 82.

In Figures 3 and 4, the passageway 55 of the hollow bolt 53 preferably comprises a first, lateral chamber, or cavity, 84 that is sized and configured to house one or more lateral bearings 86. Accordingly, the lateral chamber 84 is preferably cylindrical in shape and defines an inner diameter 88, shown in Figure 3, sufficiently large to receive the lateral bearings 86. The lateral bearings 86 are thus interposed between the spindle and the crank arm, and configured to facilitate rotation of the spindle with respect to the crank arm.

The passageway 55 also preferably comprises a second medial chamber, or cavity, 91 sized and configured to house one or more medial bearings 93. In the preferred embodiment, the medial chamber 91 defines an inner diameter 95, shown in Figure 3, that is preferably smaller than the inner diameter 88 of the lateral chamber 84. A central bore 97 with an inner diameter 98 smaller than both chamber inner diameters 88, 95 is disposed between the lateral chamber 84 and medial chamber 91.

It is to be expressly understood that while the bearings 86, 93 in the illustrated embodiment are housed within the hollow bolt 53, any bearings or other types of annular rotators need not be housed within the bolt 53 so long as such rotators are disposed outside the pedal body 20.

When assembled, the first cylindrical portion 68 of the medial spindle portion 51 is disposed in the lateral chamber 84 of the bolt 53 and inserted through one or more lateral bearings 86. The second cylindrical portion 73 extends through the central bore 97 of the bolt 53. The third cylindrical portion 77 is disposed in the medial chamber 91 of the bolt 53 and inserted through one or more medial bearings 93. A spindle nut 102 is screwed onto the externally threaded proximal portion 82 to axially secure the spindle 40 to the bolt 53 while still enabling the spindle 40 to rotate freely with respect to the bolt 53.

The external surface 104 of the bolt 53 comprises a lateral nut portion 106 and a medial externally threaded portion 108 which is configured to mate with an internally threaded bore 111 defined in the crank arm 42. In the preferred embodiment, the medial externally threaded portion 108 extends all the way through the bore 111, and thus through the entire crank arm width 57. An internally threaded cap 113 configured to mate with the externally threaded bolt portion 108 on the opposite medial side 115 of the crank arm 42. The externally threaded portion 108 may also be regarded as an externally threaded hollow cylinder 108 in which one or more medial bearings 93 are disposed.

In the preferred embodiment, it will be appreciated that the spindle 40 is ultimately rotatable with respect to the crank arm 42 because the spindle 40 is rotatable with respect to the bolt 53 which is rotationally fixed to the crank arm 42. It will further be appreciated that the spindle 40 extends transversely through the majority or the entirety of the width of the crank arm 42, thereby providing greater stiffness, stability and strength in supporting the weight and force of the user.

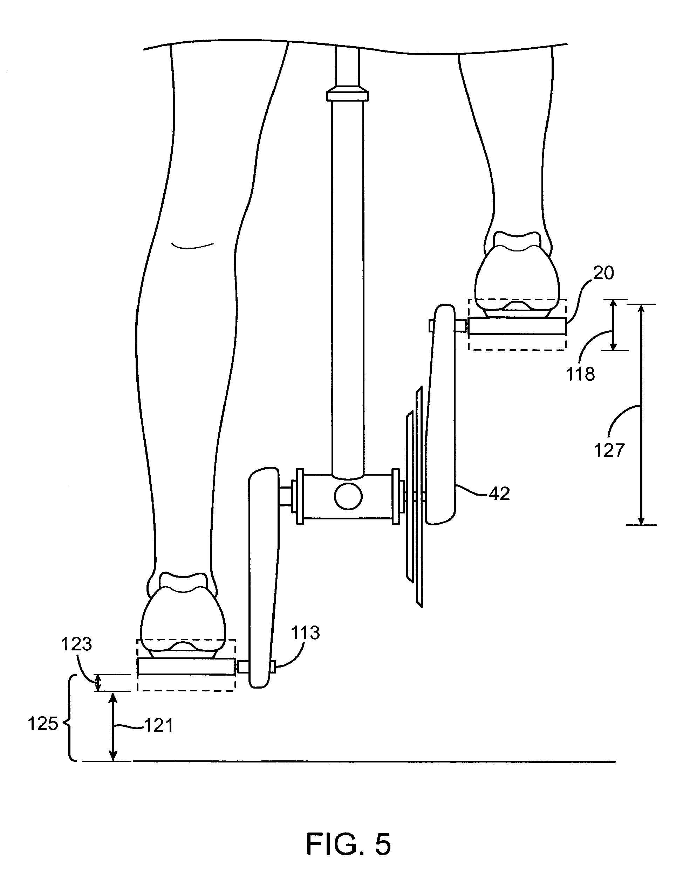

Figure 5 illustrates in phantom lines the typical thickness 118 of a conventional pedal body drawn over the preferred pedal body 20 according to the invention. In Figure 5, it will be appreciated that an extremely thin pedal body 20 made possible by omitting any bearings or annular rotators provides several advantages over conventional pedal assemblies. All bearings in the preferred embodiments are disposed outside the pedal body20. In operation, a conventional pedal body is closer to the ground and thus provides a typical ground clearance 121. By substantially reducing the thickness of the preferred pedal body 20, increased ground clearance 123 is achieved, thereby providing an overall higher ground clearance 125 which will be appreciated by riders in traversing rough terrain or taking turns at an extreme angle.

For example, in the position shown in Figure 5, the rider using the preferred pedal assembly 10 can take an extreme right turn by leaning heavily to the right without getting the right pedal 20 stuck on terrain or embankment which would be commonly found on mountain biking paths, particularly on single lane paths.

In addition, a lower profile pedal body 20 provides the rider with a more stable riding experience, akin to wearing low profile shoes with thinner soles as opposed to high profile shoes with taller or thicker soles while doing strenuous activity such as running.

The extremely thin bearing-less pedal body 20 also gives a manufacturer the unique option to make and assemble crank arms 42 with greater length 127, a feature providing greater leverage to the rider on the downstroke.

Furthermore, by inserting the spindle 40 transversely through the crank arm 42 and securing the spindle 40 on the opposite side with a fastener, an overall stiffer pedal connection to the crank arm 42 is achieved.

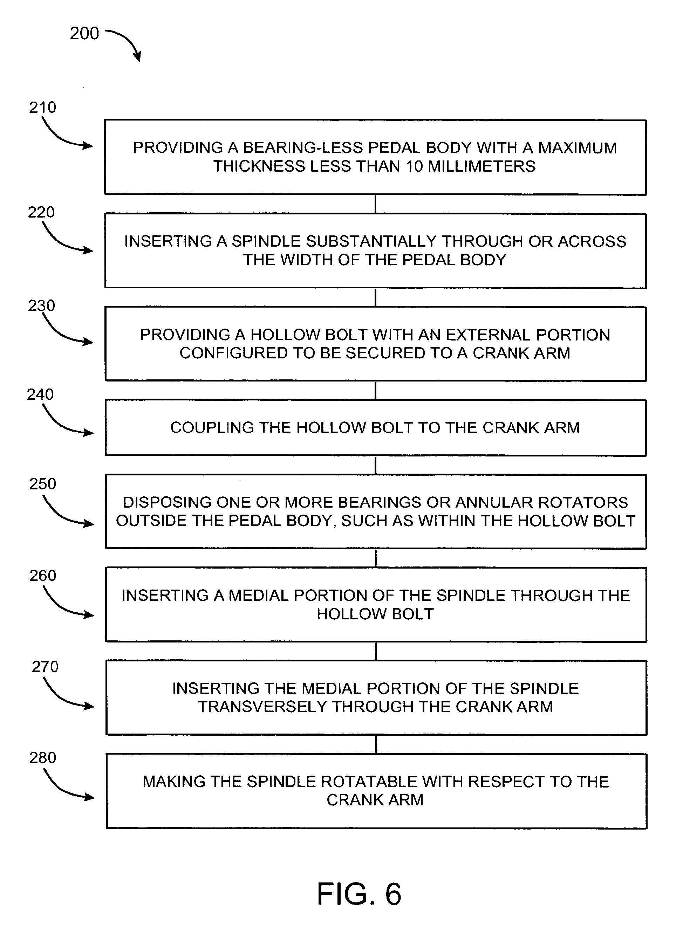

Figure 6 illustrates a preferred method 200 of manufacturing a bicycle pedal assembly. The method 200 comprises the step 210 of providing a bearing-less pedal body with a maximum thickness less than 10 millimeters. Step 210 may comprise forming the pedal body with a maximum thickness between 4mm to 8mm. In step 220, a spindle or axle is inserted or otherwise coupled to the pedal body substantially through the width of the pedal body. Step 220 may comprise inserting a rod portion of the spindle through a centrally located channel in the pedal body. Step 220 may also comprise securing a distal end of the rod portion with a fastener.

Step 230 comprises providing a hollow bolt with an axial passageway or through-hole, and an external portion configured to be secured to a crank arm. Step 230 may comprise forming the external portion of the bolt with external threads configured to mate with internal threads of a bore in the crank arm. Step 230 may also comprise forming a lateral external portion of the bolt with a nut to facilitate screwing by the user.

Step 240 comprises coupling or otherwise securing the hollow bolt to the crank arm, such as by screwing the externally threaded portion of the bolt to an internally threaded bore in the crank arm. Step 240 may also comprise securing a cap onto the portion of the bolt protruding from the other side, i.e., medial side, of the crank arm.

Step 250 comprises disposing one or more bearings or other types of annular rotators outside the pedal body. For example, step 250 may comprise disposing one or more bearings within the hollow bolt. Step 250 may further comprise disposing one bearing in a lateral chamber formed in the bolt, and another bearing in a medial chamber of the bolt.

Step 260 comprises inserting a medial portion of the spindle through the hollow bolt. Where bearings are housed within the hollow bolt, step 260 may comprise inserting the medial portion of the spindle through the bearings housed within the hollow bolt.

Step 270 comprises inserting the medial portion of the spindle transversely through the crank arm. In step 260, the medial portion of the spindle is inserted through the majority, and preferably the entirety, of the width of the crank arm. Step 270 may also comprise securing a proximal end of the spindle with a cap. While 270 is described as a step, it is to be understood that step 270 may be accomplished concurrently with step 260 of inserting the spindle through the hollow bolt, particularly if the bolt is secured to the crank arm prior to inserting the spindle.

Step 280 comprises making the spindle rotatable with respect to the crank arm. In the preferred embodiment, step 280 comprises rotationally fixing the hollow bolt to the crank arm, and making the spindle rotatable with respect to the hollow bolt, and thus rotatable with respect to the crank arm. Step 280 may comprise making the spindle rotationally fixed to the pedal body.

The method 200 may also comprise the optional step of manufacturing a crank arm of increased length, particularly in the range of 180 mm to 190 mm. This unique manufacturing step is made possible by an extremely low profile pedal body which does not house any bearings.

Since a bicycle will require two pedal assemblies, it is to be expressly understood that the method 200 comprises repeating steps 210 to 280 for a second pedal assembly on the same bike.

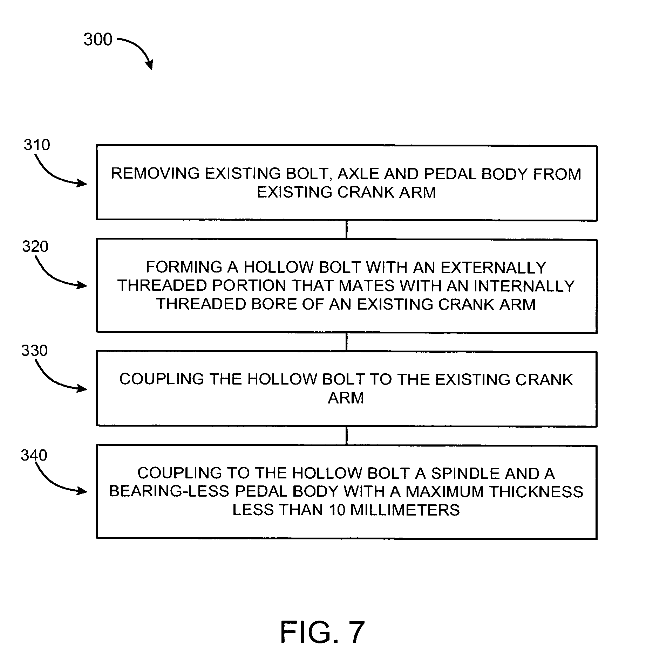

Figure 7 illustrates a preferred method 300 of retrofitting an existing bicycle with a preferred bicycle assembly according to the invention. In particular, a portion or all of the components of the pedal assembly as shown and described in Figures 1-5 may be retrofitted, or assembled, onto an existing bicycle having an existing crank arm.

The method 300 comprises the step 310 of removing the existing bolt, axle and pedal body from each of the pair of existing crank arms. Step 320 comprises forming a hollow bolt with an externally threaded portion that mates with an internally threaded bore of an existing crank arm. Step 320 thus comprises forming the externally threaded portion of the bolt with a diameter and thread pitch that mates with the internal diameter and thread pitch of the internally threaded crank arm bore.

To the extent that internally threaded bores of crank arms are manufactured according to universal standards, step 320 may comprise forming hollow bolts with varying externally threaded portions that match these standards.

Step 330 comprises coupling or otherwise securing the hollow bolt to the existing crank arm. Step 330 may comprise screwing the hollow bolt into the internally threaded bore of the crank arm, and screwing a cap onto the portion of the bolt protruding from the other side, i.e., medial side, of the crank arm.

Step 340 comprises joining the remaining pedal assembly to the hollow bolt, including the bearing-less pedal body with a maximum thickness less than 10mm, and the spindle inserted through the pedal body. Accordingly, step 340 may incorporate by reference steps 210, 220, 250, 260, 270 and 280 of method 200 as described above and illustrated in Figure 6.

The method 300 comprises repeating steps 310 to 340 for the second existing crank arm of the same bicycle.

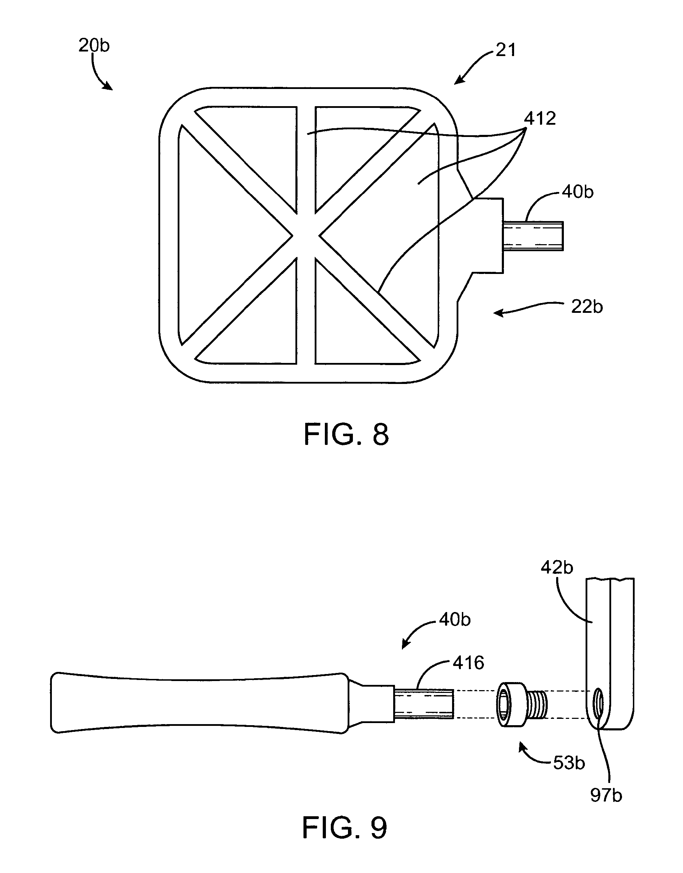

Figure 8 is a top plan view of a second preferred embodiment of a bicycle pedal body 20b where elements of similar structure are designated by the same reference numerals followed by the letter "b." In this embodiment, an axle 40b is formed integrally with the pedal body 20b. Accordingly, the axle 40b need not extend substantially across with the width of the pedal body 20b. The integral axle 40b only needs to extend medially from the pedal body 20b. Instead, the pedal body 20b may comprise a cage 21 and cross members, or bridges, 412 disposed within the cage 21 and coupled to portions of the cage 21. In this preferred embodiment, the bridges 412 extend from one interior portion of the cage 21 all the way across to an opposite portion thereof. Thus, the second preferred pedal body 20b may omit the plate in the first preferred pedal body discussed above in connection with Figure 1.

Figure 9 is a front exploded view of a second preferred embodiment of a bicycle pedal assembly 10b. In Figure 9, the axle 40b comprises a medial cylindrical rod 416 configured to be inserted through an axle connector 53b, which is screwed into a bore 97b of a crank arm 42b. The axle connector 53b may comprise a hollow bolt 53b which houses one or more bearings (not shown) to facilitate rotation of the integrally combined axle 40b and pedal body 20b. The hollow bolt 53b couples the axle 40b to the crank arm 42b in such a way that the axle 40b extends substantially through the bore 97b. Alternatively stated, the axle 40b extends through both the hollow bolt 53b and the crank arm 42b.

By forming the axle 40b integrally with the pedal body 20b, specifically with the medial side 22b of the pedal body 20b, it will be appreciated that greater variability is provided for any structures within the cage 21 b since the integral axle 40b need not extend across the width of the pedal body. Thus, the following additional preferred embodiments of the pedal body illustrate the flexibility of forming the interior of the cage when an integral axle is provided.

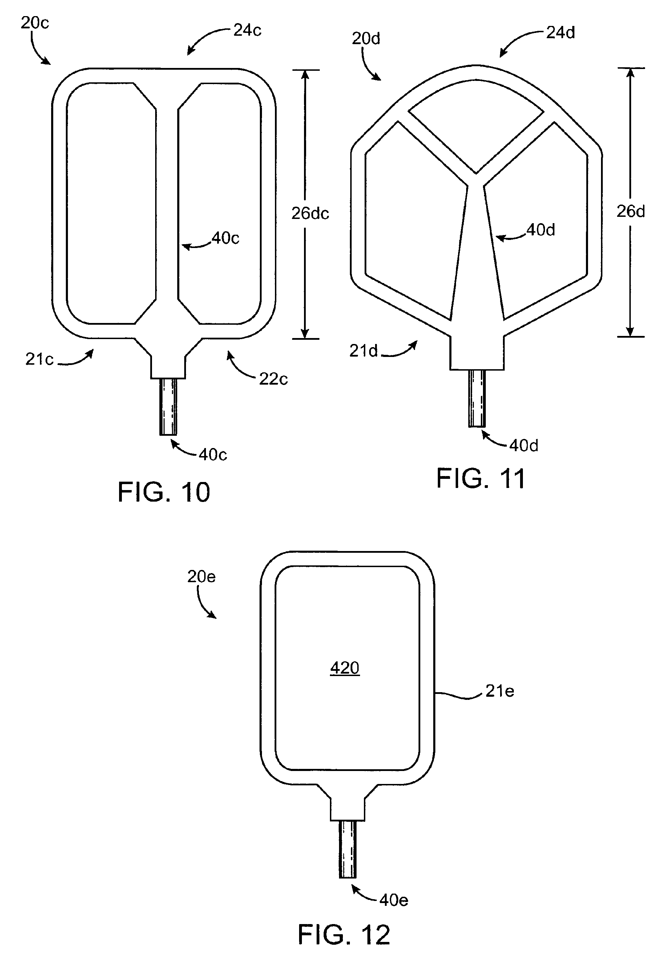

Figure 10 is a top plan view of third preferred embodiment of a bicycle pedal body 20c where elements of similar structure are designated by the same reference numerals followed by the letter "c." In this embodiment, an axle 40c is formed integrally with the pedal body 20c and extends all the across the width 26c of the pedal body 20c, namely from a medial side 22c all the way to a lateral side 24c of the cage 21 c.

Figure 11 is a top plan view of fourth preferred embodiment of a bicycle pedal body 20d where elements of similar structure are designated by the same reference numerals followed by the letter "d." In Figure 11, the axle 40d is integral with the pedal body 20d. The axle 40d in this preferred embodiment is tapered as it begins with a thicker base 418 adjacent to the cage 21 d and thins out as it extends at least partially across with the width 26d of the pedal body 20d towards the lateral side 24d. In this preferred embodiment, the integral axle 40d splits into multiple bridge members 412d which are coupled to interior portions of the cage 21d.

Figure 12 is a top plan view of fifth preferred embodiment of a bicycle pedal body 20e where elements of similar structure are designated by the same reference numerals followed by the letter "e." In Figure 12, the axle 40e is integral with the pedal body 20e. The axle 40e terminates at an external portion of the cage 21 e and does not extend across the width 26e of the pedal body 20e. More specifically, the axle 40e does not extend into any interior space within the cage 21 e, thereby providing a substantially open axle-free space, or void, 420 within the bounds of the cage 21 e.

Many alterations and modifications may be made by those having ordinary skill in the art without departing from the spirit and scope of the invention. Therefore, it must be understood that the illustrated embodiments have been set forth only for the purposes of examples and that they should not be taken as limiting the invention as defined by the following claims. For example, notwithstanding the fact that the elements of a claim are set forth below in a certain combination, it must be expressly understood that the invention includes other combinations of fewer, more or different elements, which are disclosed in above even when not initially claimed in such combinations.

The words used in this specification to describe the invention and its various embodiments are to be understood not only in the sense of their commonly defined meanings, but to include by special definition in this specification the generic structure, material or acts of which they represent a single species.

The definitions of the words or elements of the following claims are, therefore, defined in this specification to not only include the combination of elements which are literally set forth. In this sense it is therefore contemplated that an equivalent substitution of two or more elements may be made for any one of the elements in the claims below or that a single element may be substituted for two or more elements in a claim. Although elements may be described above as acting in certain combinations and even initially claimed as such, it is to be expressly understood that one or more elements from a claimed combination can in some cases be excised from the combination and that the claimed combination may be directed to a subcombination or variation of a subcombination.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

The claims are thus to be understood to include what is specifically illustrated and described above, what is conceptionally equivalent, what can be obviously substituted and also what incorporates the essential idea of the invention.

## Claims

1. A bicycle pedal assembly, comprising:
a bearing-less pedal body including a medial side and a lateral side, the pedal body defining a length, a width and a maximum thickness;
an axle connected to the pedal body; and **characterized in that** it further comprises
a hollow bolt coupling the axle to a crank arm defining a bore, the hollow bolt being screwed into the bore, the hollow bolt housing at least one bearing located outside the pedal body and configured to facilitate rotation of the axle with respect to the crank arm.

2. The assembly of Claim 1, further comprising a bearing located outside the pedal body and configured to facilitate rotation of the pedal body with respect to a crank arm.

3. The assembly of any preceding claim, wherein the axle does not extend entirely across the width of the pedal body.

4. The assembly of any preceding claim, wherein the pedal body comprises a cage and a bridge coupled to a portion of the cage.

5. The assembly of any preceding claim, wherein the pedal body comprises a cage and defines an axle-free space within the cage.

6. The assembly of any preceding claim, wherein the axle is tapered.

7. The assembly of any preceding claim, further comprising a bearing located within the hollow bolt and configured to facilitate rotation of the pedal body with respect to the crank arm.

8. The assembly of any preceding claim, wherein the axle does not extend entirely across the width of the pedal body.

9. The assembly of any preceding claim, wherein the pedal body comprises a cage and a bridge coupled to a portion of the cage.

10. The assembly of any preceding claim, wherein the pedal body comprises a cage and defines an axle-free space within the cage.

## Patentansprüche

1. Fahrradpedalanordnung, umfassend:
einen lagerlosen Pedalkörper, der eine mediale Seite und eine laterale Seite einschließt, wobei der Pedalkörper eine Länge, eine Breite und eine maximale Dicke definiert;
eine Achse, die mit dem Pedalkörper verbunden ist; und **dadurch gekennzeichnet, dass** sie weiter umfasst:
einen hohlen Schraubbolzen, der die Achse an einen Kurbelarm koppelt, der eine Bohrung definiert, wobei der hohle Schraubbolzen in die Bohrung geschraubt wird, der hohle Schraubbolzen zumindest ein Lager beherbergt, das sich außerhalb des Pedalkörpers befindet und konfiguriert ist, Drehung der Achse in Bezug auf den Kurbelarm zu erleichtern.

2. Anordnung nach Anspruch 1, die ferner ein Lager umfasst, das sich außerhalb des Pedalkörpers befindet und konfiguriert ist, Drehung des Pedalkörpers in Bezug auf einen Kurbelarm zu erleichtern.

3. Anordnung nach einem vorangehenden Anspruch, wobei sich die Achse nicht gänzlich über die Breite des Pedalkörpers erstreckt.

4. Anordnung nach einem vorangehenden Anspruch, wobei der Pedalkörper einen Käfig und eine Brücke umfasst, die an einen Teil des Käfigs gekoppelt ist.

5. Anordnung nach einem vorangehenden Anspruch, wobei der Pedalkörper einen Käfig umfasst und einen achsfreien Raum innerhalb des Käfigs definiert.

6. Anordnung nach einem vorangehenden Anspruch, wobei die Achse konisch ist.

7. Anordnung nach einem vorangehenden Anspruch, die ferner ein Lager umfasst, das sich innerhalb des hohlen Schraubbolzens befindet und konfiguriert ist, Drehung des Pedalkörpers in Bezug auf den Kurbelarm zu erleichtern.

8. Anordnung nach einem vorangehenden Anspruch, wobei sich die Achse nicht gänzlich über die Breite des Pedalkörpers erstreckt.

9. Anordnung nach einem vorangehenden Anspruch, wobei der Pedalkörper einen Käfig und eine Brücke umfasst, die an einen Teil des Käfigs gekoppelt ist.

10. Anordnung nach einem vorangehenden Anspruch, wobei der Pedalkörper einen Käfig umfasst und einen achsfreien Raum innerhalb des Käfigs definiert.

## Revendications

1. Ensemble de pédalier d'une bicyclette, comportant:
une pédale sans palier comprenant un côté médian et un côté latéral, la pédale définissant une longueur, une largeur et une épaisseur maximum;
un essieu raccordé à la pédale; et **caractérisé en ce qu'**il comporte par ailleurs
un boulon creux raccordant l'essieu à un bras de manivelle qui définit un alésage, le boulon creux étant vissé dans l'alésage, et le boulon creux renfermant au moins un palier situé à l'extérieur de la pédale et configuré de manière à faciliter la rotation de l'essieu par rapport au bras de manivelle.

2. Ensemble de pédalier selon la revendication 1, comportant par ailleurs un palier situé à l'extérieur de la pédale et configuré de manière à faciliter la rotation de l'essieu par rapport à un bras de manivelle.

3. Ensemble de pédalier selon l'une quelconque des revendications précédentes, **caractérisé en ce que** l'essieu ne s'étend pas totalement à travers la largeur de la pédale.

4. Ensemble de pédalier selon l'une quelconque des revendications précédentes, **caractérisé en ce que** la pédale comprend une cage et un pont raccordé à une partie de la cage.

5. Ensemble de pédalier selon l'une quelconque des revendications précédentes, **caractérisé en ce que** la pédale comprend une cage et définit un espace sans essieu à l'intérieur de la cage.

6. Ensemble de pédalier selon l'une quelconque des revendications précédentes, **caractérisé en ce que** l'essieu est conique.

7. Ensemble de pédalier selon l'une quelconque des revendications précédentes, comportant par ailleurs un palier situé à l'intérieur du boulon creux et configuré de manière à faciliter la rotation de la pédale par rapport au bras de manivelle.

8. Ensemble de pédalier selon l'une quelconque des revendications précédentes, **caractérisé en ce que** l'essieu ne s'étend pas totalement à travers la largeur de la pédale.

9. Ensemble de pédalier selon l'une quelconque des revendications précédentes, **caractérisé en ce que** la pédale comprend une cage et un pont raccordé à une partie de la cage.

10. Ensemble de pédalier selon l'une quelconque des revendications précédentes, **caractérisé en ce que** la pédale comprend une cage et définit un espace sans essieu à l'intérieur de la cage.
